# EUROPEAN PATENT SPECIFICATION

(11) **EP 0 662 231 B1**
(45) Date of publication and mention of the grant of the patent: **19.03.1997**
(21) Application number: 93920968.0
(22) Date of filing: 17.09.1993
(51) Int. Cl.: G09B 19/00, G09B 5/04, G11B 20/10

(54) **TEACHING AID**
LEHRHILFE
MATERIEL DE FORMATION

(30) Priority: 22.09.1992 GB 9219986
(43) Date of publication of application: 12.07.1995
(73) Proprietor: COPELAND, Peter, Chichester, West Sussex PO20 7BZ (GB)
(72) Inventor: COPELAND, Peter, Chichester, West Sussex PO20 7BZ (GB)
(74) Representative: Harland, Linda Jane
(86) International application number: GB9301971
(87) International publication number: WO9407226

(56) References cited:
- EP-A- 0 162 967
- WO-A-80/01726
- WO-A-90/02402
- FR-A- 2 648 926

## Description

The present invention relates to a decoder for use with an audio playback device, the decoder having an input for connection to the output of the playback device; and means for detecting encoded signals in a signal input from the playback device and for converting the encoded signals from an encoded form to keystroke signals suitable for input to the keyboard input of a computer. Such a decoder may be used, for example, in a system for providing control over a computer simultaneously with reproduction of an audio signal, comprising, for example, instructions or guidance on computer operation.

In a further aspect the invention relates to recording apparatus comprising an input fro receiving an audio signal and means for recording the said audio signal on a recording medium and also to an audio recording comprising a recording medium having recorded thereon signals representing a sound track and encoded signals.

Over the last few years, use of computers, and in particular, personal computers, has become very widespread in all areas of life. Consequently, there are now many computer users who have very little specialist training. They, along with users of specialist systems which require particular knowledge or background information, must try to learn how to use new systems and programs as best they can.

One method of teaching users of new systems is to send them to seminars and presentations at which the operation of new systems and software can be explained to them. The disadvantage of this method of teaching is that students may retain little of what they are told and if, subsequently, they encounter problems, they have no way of resolving them other than to turn to the other main teaching aid in this field, the written manual. In practice, most users learn how to operate new software or equipment from written instruction manuals and guides. Unfortunately, experience shows that many of these are badly written and unclear and that understanding them is not straightforward.

We have appreciated that it would be desirable to provide a teaching aid which combines the advantages of the two teaching methods referred to above.

One such teaching system involves the use of a recorded training session, the recording including both an audio track and signals for operating a computer independently of the student or trainee. A system of this kind is described in US Patent No. 4 637 797 (Whitney et al). However, the apparatus described in the US patent is complex and requires special software to enable it to operate.

Another such system is described in French patent No. 2 648 926.

The present invention aims to provide a teaching aid which is simple, easy to operate and which involves the use of conventional audio equipment.

Accordingly, the decoder of the invention is characterised in that the decoder comprises an output for connection to the keyboard input of a computer so that the keystroke signals can be applied thereto.

Using such a decoder it is possible to provide, from a suitable recording, an audible commentary or guide with simultaneous, automatic operation of the listener's computer to demonstrate what is being described. 3ecause the decoder plugs directly into the keyboard input of the computer there is no need for additional software or hardware within the computer to enable the computer to recognise and act on the keystroke signals.

Further, recording apparatus of the invention is characterised in that it comprises an encoder having an input for receiving keystroke signals generated by a keyboard device for a computer and means for converting the said signals into dual tone multiple frequency (DTMF) signals capable of being recorded by the audio signal recording means; the encoder having an output for connection to an input of the said recording means, so that the audio signals and converted control signals can be recorded together on the recording medium.

The audio recording of the invention is characterised in that the encoded signals are derived from keystroke signals generated by a keyboard device for a computer so that, when the recording is played back, the encoded signals can, after decoding, be applied to the keyboard input of a computer to operate it simultaneously with reproduction of the sound track.

The invention also provides a method for making such an audio recording in which keystroke signals generated by a keyboard device for a computer are converted into DTMF tones capable of being recorded by audio signal recording means; and the DTMF tones are recorded on a recording medium together with signals representing a sound track.

It is preferred that the DTMF tones are recorded on a separate track to the audio signal but this is not essential; the tones form quite "musical" sequences and are unlikely to prove offensive or unduly distracting to the listener.

Furthermore, the invention provides a method of operating a computer, the method comprising replaying such an audio recording by means of an audio playback device, detecting encoded keystroke signals recorded on the recording medium of the audio recording and converting the encoded signals to keystroke signals for a computer, and applying the converted signals to the keyboard input of a computer to operate it.

It will be appreciated that the teaching aid system described is simple and easy to manufacture whilst providing better training assistance for computer users. Because the system records and uses keystrokes rather than data or operating information provided by the computer itself the system is compatible with a very wide range of personal computers, most of which use standard keyboards.

Embodiments of the invention will now be described in detail, by way of example, with reference to the drawings, in which:
Figure 1 shows schematically recording using an encoder forming part of a system in accordance with the invention;
Figure 2 is a schematic illustration of playback using a decoder forming part of a system in accordance with the invention;
Figure 3 is a circuit diagram of one form of decoder for use in the system of the invention;
Figure 4 shows schematically an arrangement allowing editing of the recording;
Figure 5 shows schematically an alternative arrangement allowing editing of the recording; and
Figure 6 shows use of the system to achieve control of a remote computer.

In broad terms, the system of the invention includes an encoder associated with an audio recorder and a decoder associated with an audio playback device, for example, a loudspeaker. The encoder acts to capture control signals from an input device associated with a computer and to convert them to a form in which they can be recorded on audio tape. The decoder acts to identify the recorded control signals on the audio tape and to convert them to a form in which they can be recognised and acted on temporally by the computer.

The encoder and decoder elements of the system are used in two separate operations; recording - which may typically take place in an educational or training establishment or in a commercial undertaking with a view to producing recordings for sale or hire; and playback, where the student uses the recording in place of, for example, a printed manual.

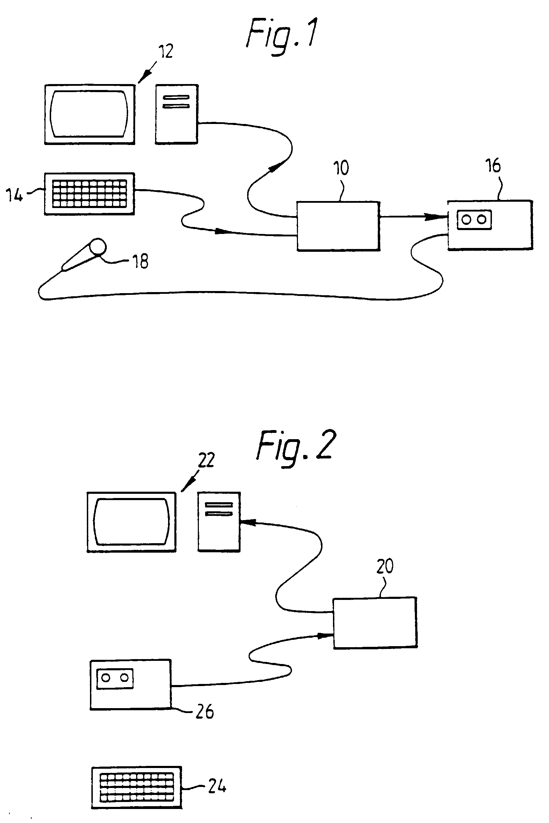

Recording is illustrated schematically in Figure 1. The encoder 10 referred to above is connected between the demonstrator's computer 12 and an input device 14, in this case, a keyboard. The input device might equally be a mouse, a touch screen or other known devices for inputting control signals to a computer. The encoder 10 is also connected to the input socket of an audio recorder 16. Also connected to the audio recorder input is a microphone 18.

The keyboard 14 is coupled by means of a keyboard splitter arrangement (not shown) so that its output signals drive the computer and, at the same time are converted by the encoder 10. The encoder 10 accepts the signals from the keyboard 14 and converts them to a form capable of recordal on an audio tape. In a preferred embodiment, the encoder 10 converts the signals to DTMF (dual tone multiple frequency) tones. In a preferred form of this coding system, each character of the keyboard is represented by two tones. This permits the full PC and ASCII character sets to be encoded. Alternative coding systems or tone formats can be implemented, for example, one tone per character and use of the ALT NUMBER ALT sequence to generate ASCII characters. Such systems are, however, better suited to implementations using a reduced character set.

During recording, it is envisaged that the tutor or demonstrator will deliver his commentary via the microphone 18 to the audio recorder 16. At the same time keystroke operations during the course of the demonstrations are converted by the encoder 10 to DTMF tones and recorded with the audio signal from the microphone 18.

The tones from the encoder 10 can be recorded onto any suitable audio recording medium, for example, a cassette tape or optical disc. Due to the high integrity and reliability of the encoding technique adopted, special audio equipment is not necessary; simple portable audio units such as personal cassette systems and dictation machines can be used.

During playback, shown in Figure 2, a decoder 20 is connected to the keyboard input or RS232 socket of the student's computer 22. An audio playback device 26, for example, a cassette player is connected to the decoder input. As the recording is played back the audio signal is reproduced in the usual way through the loudspeaker of the playback device or through headphones, if the user prefers. At the same time, the DTMF codes are converted by the decoder 20 to control signals recognisable to the computer 22. These control signals mimic keystrokes of the computer keyboard or other input device and cause the computer to operate in the same manner as actual keystrokes. Thus, as the commentary embodied in the audio signal progresses, the computer 22 acts under the control signals from the decoder 20 so as to demonstrate on the computer monitor or display what is being described. During playback, the computer keyboard 24 is not used and can be disconnected. This is, in fact, to be preferred since additional keystrokes input by the student deliberately or inadvertently may disrupt the sequence of keystroke signals from the decoder 20.

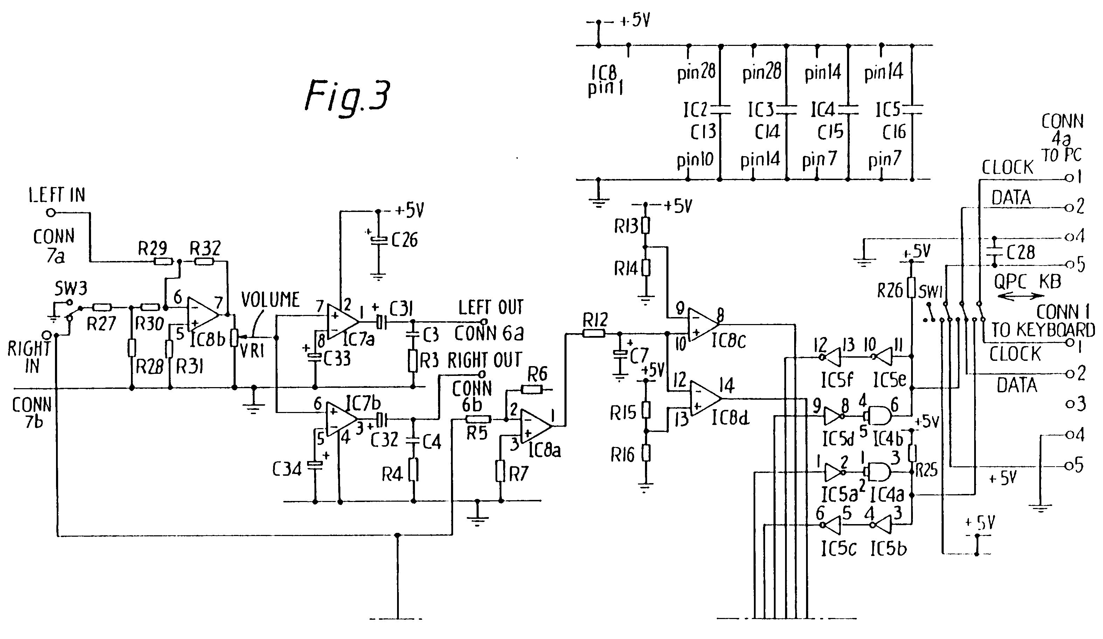

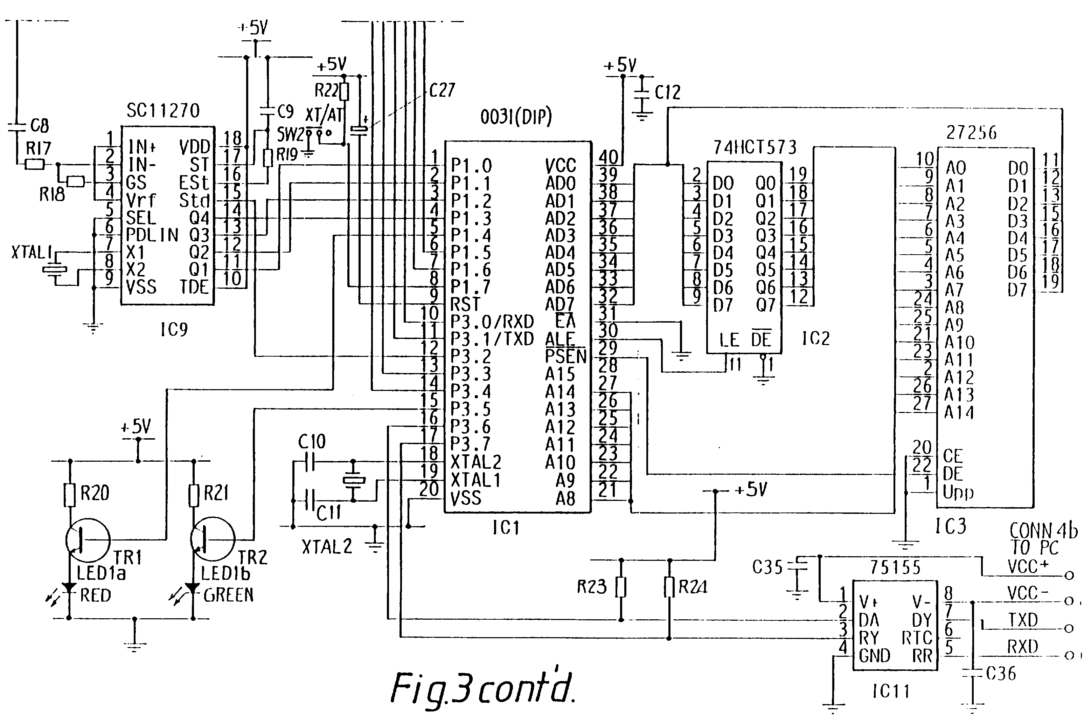

One form of decoder 20 is illustrated in the circuit diagram of Figure 3.

Referring to Figure 3, the signals which arrive from the audio cassette player 26 are in two forms: the left channel carries the narrative and the right channel contains the encoded keyboard data. These two channels are mixed together via IC8b, with the option of the tones from the right channel either being added at an attenuation of 6dB using R27 and R28 or being completely absent; the choice is determined by the position of switch SW3.

On leaving the mixer circuit, the resulting signal is fed to two identical audio amplifier devices, IC7a and IC7b. These amplify and filter the signal before being passed to the headphone socket CONN6A/B. The volume of the signal may be adjusted using VR1.

As well as being optionally mixed with the narrative, the encoded data is also passed along two other routes: to the tone decoder and to the level sensing circuit.

The tone encoder is formed around IC9, with the gain of its input stage being set by R17 and R18 to a factor of approximately three times. The time constant formed by the combination of R19 and C9 enables the device to reject tones which are either:
a) too short in duration, or
b) too close to one another.

The output from the tone encoder takes two forms. Pin 15, Std output is taken to a high level when a tone-pair is correctly decoded. The binary representation of the tones is presented on outputs Q1 to Q4 (pins 11 to 14 respectively).

The outputs from the tone decoder are fed into a standard microprocessor configuration, based around ICS 1 to 3. The microprocessor operates at a speed of 16MHz, governed by crystal XTAL2. The initial power-on reset pulse width is determined by the time-constant formed by R22 and C27. IC2 latches the lower eight address bits from the multiplexed lines AD0 to AD7, before passing them to the EPROM device, IC3. No external RAM has been provided, since there is sufficient capacity within the microprocessor.

Resistors R23 and R24 pull the port lines P3.6 and P3.7 to +5 volts. These lines in turn are connected to the optional RS232 port, IC11. If an RS232 configured device is to be connected to the unit, instead of to the PC socket, CONN4a, then this may be achieved by pulling either of these lines to ground, thus alerting the microprocessor.

IC8a acts as an inverting amplifier, increasing the level of the tones before being passed into the two comparators, IC8c/d. The low-pass filter formed around R12 and C7 is to ensure that the comparators only operate on the average signal level and ignore spaces between tones.

The two potential dividers formed around the networks R13/14 and R15/16 set the upper and lower level thresholds between which the incoming tones should lie. The outputs from the comparators are fed into the microprocessor via its port pins P1.5 and P1.6. The software recognises the status indicated by the comparators and in turn drives the two colour light emitting diodes LED1, via the driver transistors TR1 and TR2.

Decoded data is converted into scan-codes by the microprocessor and is transmitted to the computer via the buffering circuit IC4 and IC5. This circuit also allows for data to be sent from the computer to the QPC unit. The type of computer to which the QPC may be connected to is governed by the setting of switch SW2, which is read at power-on.

Both the recording and playback sequences described above are direct, that is to say, the recording and/or playback take place at the same location as the demonstrator's/student's computer, respectively. It will be appreciated, however, that the recording may be subject to editing and that the DTMF signals may be transmitted via a telephone or other communication line from one location to another.

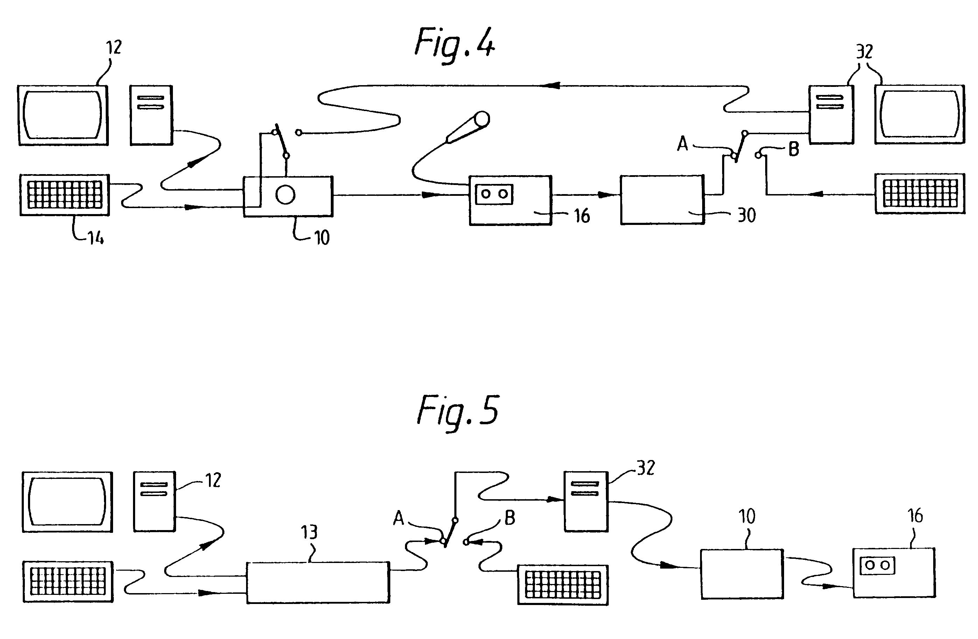

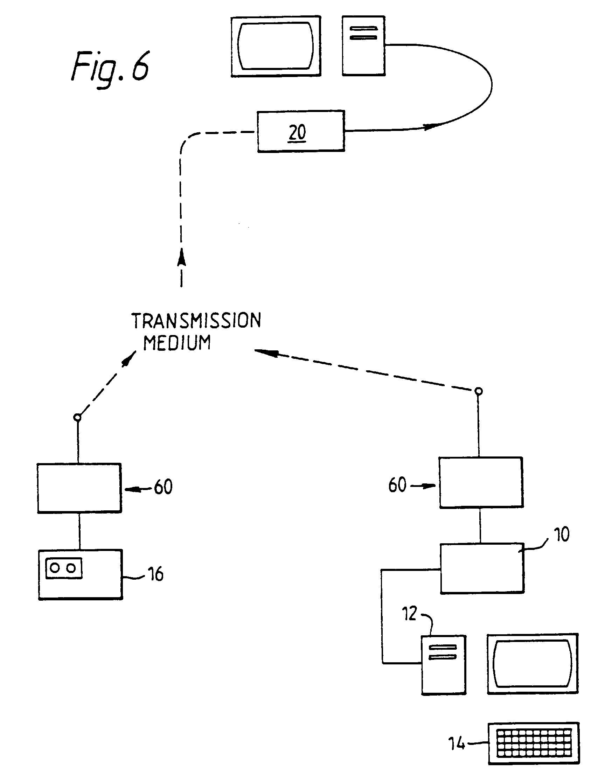

Figures 4 and 5 show more elaborate ways in which keyboard data can be stored and edited before being recorded or transmitted.

In Figure 4, the output control signal from the keyboard 14 is connected to the encoder 10 by means of a switch A. When this switch is closed, both the computer 12 and the encoder 10 receive the keyboard output. The computer 12 receives and processes the keyboard output in the usual way, while the encoder 10 converts the serial data stream from the key depressions at the keyboard 14 into a two digit hexadecimal code which is output by the encoder 10 as two DTMF tones, exactly as described in relation to Figure 1.

The tones output by the encoder 10 are transmitted through the audio recorder 16 to a decoder 30 similar to the decoder 20 of Figure 2. After decoding, these tones are transmitted to an editing station 32, usually another personal computer (pc) which sees the tones in their decoded form as keyboard entry or RS232 data. Using suitable software, the editing station 32 stores the keystroke signals onto disc.

The editing station software allows the keystroke data to be retrieved and edited as required. For example, the time interval between keystrokes and/or data can be adjusted to optimise the subsequent recorded presentation. Once editing is complete, both encoder and decoder switches are moved to position B so that keystroke signals and/or data output from the editing station 32 via RS232 printer port of bus I/O are transmitted to the encoder 10 and recorded as DTMF tones on a suitable recording medium at the audio recorder 16. Typically, speech and/or music is added at the same time.

In the arrangement of Figure 5, the output from the keyboard 14 is fed via a keyboard splitter 13 to both the computer 12 and, with the switch in position A, to the editing station 32. The computer 12 processes the keyboard output in the usual way whilst the editing station receives and stores the data. The encoder 10 receives the data as a pair of hexadecimal digits from the editing station 32 and converts these to a pair of DTMF tones which may optionally be recorded at this time. If the data is to be edited, then, with the switch in position B, the editing station keyboard 34 is used as normal, allowing the data to be retrieved, edited and, in its revised form, stored on disc. When the data has been optimised, the editing station 32 sends it to the encoder 10 which then converts it to DTMF tones for recordal at audio recorder 16.

Figure 6 shows how the system may be implemented to achieve control of a remote pc via a transmission medium such as, for example, telephone, cable, radio, infrared, ultrasonic or other means by which audio signals can be transmitted. In this mode of operation, the keystrokes or data may be prerecorded and edited as described in relation to Figures 1, 4 and 5 or sent via a remote computer 10, either from storage discs or by means of live keyboard input. In either case, the data is transmitted by means of suitable data transmission means 60.

The system described above can, thus, provide a simple and effective interface which controls a personal computer by means of audio playback, either directly or through a suitable transmission medium. The encoder/decoder can easily be connected into a pc by inexperienced or non-technical users and is used in conjunction with familiar consumer equipment such as personal stereo cassette players, telephones and radios.

As mentioned above, keystroke data generated by the demonstrator can be edited to optimise subsequent presentations to students and trainees by synchronising keystrokes with an audio track including, for example, speech and music.

Whilst the system has been described in connection with training, it will be appreciated that it is suitable for a wide range of other applications, for example, advertising, demonstrations, point-of-sale displays, remote information points and the like. When used in the context of training, it permits the provision of software training and presentations in different languages and without modifying in any way the original software.

Furthermore, replication of the recorded presentation can be achieved using standard industry and consumer techniques.

For clarity, it is stated that, for the purpose of this specification, the term "sound track" is intended to mean an audio track capable of having sound recorded on it, irrespective of whether any sound is actually recorded. Similarly, the term "audio signal" is to be taken to include a signal which consists wholly or partially of signals representing silences.

## Claims

1. A decoder (20) for use with an audio playback device (26), the decoder (20) having an input for connection to the output of the playback device (26) ; and means for detecting encoded signals in a signal input from the playback device (26) and for converting the encoded signals from an encoded form to keystroke signals suitable for input to the keyboard input of a computer (22) ; **characterised in that** the decoder (20) comprises an output for connection to the keyboard input of a computer (22) so that the keystroke signals can be applied thereto.

2. Apparatus according to claim 1 comprising a further output for connection to the input of a sound reproduction device so that unconverted signals from the decoder input can be applied thereto.

3. Apparatus according to claim 1 or 2 in which the input to the decoder (20) is capable of connection to a communication link so that it can be connected to receive an input signal from a playback device (16) at a remote location.

4. Apparatus according to any preceding claim in which the encoded control signals are in the form of dual tome multiple frequency ('DTMF') tones.

5. Apparatus according to any preceding claim in which the means for converting the encoded control signals acts to convert them to hexadecimal form.

6. Recording apparatus (16) comprising an input for receiving an audio signal and means for recording the said audio signal on a recording medium; the recording apparatus being **characterised in that** it comprises an encoder (10) having an input for receiving keystroke signals generated by a keyboard device (14) for a computer (12) and means for converting the said signals into dual tone multiple frequency (DTMF) signals capable of being recorded by the audio signal recording means (16); the encoder (10) having an output for connection to an input of the said recording means (16), so that the audio signals and converted control signals can be recorded together on the recording medium.

7. Apparatus according to claim 5 or 6 including editing means (32) comprising means for storing the keystroke signals and processor means for editing the stored signals.

8. Apparatus according to claim 7 in which the keystroke signals are input to the editing means (32) prior to conversion to DTMF tones, the editing means (32) having an output for connection to the input of the encoder (10).

9. An audio recording comprising a recording medium having recorded thereon signals representing a sound track and encoded signals; the recording being **characterised in that** the encoded signals are derived from keystroke signals generated by a keyboard device (14) for a computer (12) so that, when the recording is played back, the encoded signals can, after decoding, be applied to the keyboard input of a computer to operate it simultaneously with reproduction of the sound track.

10. An audio recording according to claim 9, in which the encoded signals are in the form of DTMF tones.

11. A method for making an audio recording according to claim 10 **characterised in that** keystroke signals generated by an input keyboard device (14) for a computer (12) are converted into an encoded form capable of being recorded by audio signal recording means; and the encoded signals are recorded on a recording medium together with signals representing a sound track.

12. A method according to claim 11 in which the keystroke signals generated by the keyboard device (14) are applied to the input of an encoder (10) having an output connected to the input of audio signal recording means (16), the audio signal recording means (16) receiving an audio signal representing the sound track simultaneously with the encoded signals from the encoder output for recordal.

13. A method according to claim 11 or 12 in which the keystroke signals converted into DTMF tones.

14. A method according to any of claims 11 to 13 in which the keystroke signals are stored and the stored signals edited prior to recordal.

15. A method according to claim 14 in which the keystroke signals are stored and edited before being converted to a form capable of recordal by audio signal recording means.

16. A method of operating a computer, the method comprising replaying an audio recording in accordance with claim 9 by means of an audio playback device; the method being **characterised in that** encoded keystroke signals recorded on the recording medium of-the audio recording are detected and converted to keystroke signals for a computer, the converted signals being applied to the keyboard input of a computer to operate it.

17. A method according to claim 16 in which the encoded keystroke signals are in the form of DTMF tones.

18. A method according to claim 16 or 17 in which the encoded keystroke signals are converted to hexadecimal form.

19. A method according to any of claims 16 to 18 in which the audio playback device is at a location remote from the computer, the unconverted signals being transmitted by means of a communications link between the locations.

## Patentansprüche

1. Dekodiereinrichtung (20) für die Verwendung mit einer Audiowiedergabevorrichtung (26), wobei die Dekodiereinrichtung (20) einen Eingang für die Verbindung mit einem Ausgang der Wiedergabevorrichtung (26) aufweist; und Einrichtungen für das Erfassen kodierter Signale in einer Signaleingabe von der Wiedergabevorrichtung (26) und für das Umwandeln der kodierten Signale aus einer kodierten Form in Tastenanschlagssignale, die für die Eingabe in den Tastatureingang eines Computers (22) geeignet sind;
**dadurch gekennzeichnet,**
daß die Dekodiereinrichtung (20) einen Ausgang für die Verbindung mit dem Tastatureingang des Computers (22) aufweist, so daß die Tastenanschlagssignale dort eingespeist werden können.

2. Einrichtung nach Anspruch 1,
die einen weiteren Ausgang für die Verbindung mit dem Eingang einer Tonwiedergabevorrichtung aufweist, so daß nicht umgewandelte Signale vom Eingang der Dekodiereinrichtung dort eingespeist werden können.

3. Einrichtung nach Anspruch 1 oder 2,
bei der der Eingang der Dekodiereinrichtung (20) für die Verbindung mit einer Informationsübertragungsverbindung geeignet ist, so daß diese angeschlossen werden kann, um ein Eingabesignal von einer Wiedergabevorrichtung (26) an einem entfernten Ort zu empfangen.

4. Einrichtung nach einem der vorhergehenden Ansprüche,
bei der die kodierten Steuersignale die Form von Doppelton-Frequenzvervielfachungstönen (DTMF) aufweisen.

5. Einrichtung nach einem der vorhergehenden Ansprüche,
bei der die Einrichtungen für die Umwandlung der kodierten Steuersignale so wirken, daß sie diese in eine Hexadezimalform umwandeln.

6. Aufnahmevorrichtung (16), die einen Eingang für den Empfang eines Audiosignals und Einrichtungen für die Aufzeichnung dieses Audiosignals auf einem Aufzeichnungsmedium aufweist; wobei die Aufnahmevorrichtung
**dadurch gekennzeichnet**
ist, daß sie eine Kodiereinrichtung (10) umfaßt, die einen Eingang für den Empfang von Tastenanschlagsignalen aufweist, die von einer Tastatureinrichtung (14) eines Computers (12) erzeugt werden, und Einrichtungen für das Umwandeln dieser Signale in Doppelton-Frequenzvervielfachungssignale (DTMF), die geeignet sind, um von den Audiosignal-Aufzeichnungseinrichtungen (16) aufgezeichnet zu werden; wobei die Kodiereinrichtung (10) einen Ausgang für die Verbindung mit einem Eingang der Aufnahmevorrichtung (16) aufweist, so daß die Audiosignale und die umgewandelten Steuersignale zusammen auf dem Aufzeichnungsmedium aufgezeichnet werden können.

7. Vorrichtung nach Anspruch 5 oder 6,
die Ausgabeaufbereitungseinrichtungen (32) aufweist, welche Einrichtungen für das Speichern der Tastenanschlagssignale und Bearbeitungseinrichtungen für die Ausgabeaufbereitung der gespeicherten Signale umfassen.

8. Vorrichtung nach Anspruch 7,
bei der die Tastenanschlagssignale vor der Umwandlung in DTMF-Töne in die Ausgabeaufbereitungseinrichtungen (32) eingegeben werden, wobei die Ausgabeaufbereitungseinrichtungen (32) einen Ausgang für die Verbindung mit dem Eingang der Kodiereinrichtung (10) aufweisen.

9. Eine Audioaufnahme, die ein Aufzeichnungsmedium umfaßt, auf dem Signale aufgezeichnet sind, die eine Tonspur und kodierte Signale darstellen; wobei die Aufnahme
**dadurch gekennzeichnet**
ist, daß die kodierten Signale von Tastenanschlagssignalen abgeleitet werden, die von einer Tastatureinrichtung (14) für Computer (12) erzeugt werden, so daß, wenn die Aufnahme wiedergegeben wird, die kodierten Signale, nach der Dekodierung, in den Tastatureingang eines Computers eingespeist werden können, um diesen gleichzeitig mit der Wiedergabe der Tonspur zu betreiben.

10. Eine Audioaufnahme nach Anspruch 9,
bei der die kodierten Signale die Form von DTMF-Tönen aufweisen.

11. Ein Verfahren für die Herstellung einer Audioaufnahme nach Anspruch 10,
**dadurch gekennzeichnet,**
daß Tastenanschlagssignale, die von einer Eingangstastatureinrichtung (14) für einen Computer (12) erzeugt werden, in eine kodierte Form umgewandelt werden, die geeignet ist, von Audiosignalaufzeichnungseinrichtungen aufgezeichnet zu werden; und wobei die kodierten Signale zusammen mit Signalen, die eine Tonspur darstellen, auf einem Aufzeichnungsmedium aufgezeichnet werden.

12. Ein Verfahren nach Anspruch 11,
bei dem die Tastenanschlagssignale, die von der Tastatureinrichtung (14) erzeugt werden, in den Eingang der Kodiereinrichtung (10) eingespeist werden, die einen Ausgang aufweist, welcher mit dem Eingang der Audiosignal-Aufnahmeeinrichtungen (16) verbunden ist, wobei die Audiosignal-Aufnahmeeinrichtungen (16) ein Audiosignal empfangen, das die Tonspur gleichzeitig mit den kodierten Signalen von dem Ausgang der Kodiereinrichtung für die Aufzeichnung darstellt.

13. Ein Verfahren nach Anspruch 11 oder 12,
bei dem die Tastenanschlagsignale in DTMF-Töne umgewandelt werden.

14. Ein Verfahren nach einem der Ansprüche 11 bis 13,
bei dem die Tastenanschlagsignale gespeichert werden und die gespeicherten Signale vor der Aufzeichnung aufbereitet werden.

15. Ein Verfahren nach Anspruch 14,
bei dem die Tastenanschlagsignale gespeichert und aufbereitet werden, bevor sie in eine Form umgewandelt werden, die für die Aufzeichnung mittels Audiosignal-Aufnahmeeinrichtungen geeignet ist.

16. Ein Verfahren für das Betreiben eines Computers, bei dem das Verfahren das Wiedergeben einer Audioaufnahme entsprechend Anspruch 9 mittels einer Audiowiedergabevorrichtung umfaßt; wobei das Verfahren
**dadurch gekennzeichnet**
ist, daß kodierte Tastenanschlagsignale, die auf dem Aufzeichnungsmedium aufgezeichnet sind, erfaßt und zu Tastenanschlagsignalen für einen Computer umgewandelt werden, wobei die umgewandelten Signale in einen Tastatureingang eines Computers eingespeist werden, um diesen zu betreiben.

17. Ein Verfahren nach Anspruch 16,
bei dem die kodierten Signale die Form von DTMF-Tönen aufweisen.

18. Ein Verfahren nach Anspruch 16 oder 17,
bei dem die kodierten Signale in Hexadezimalform umgewandelt werden.

19. Ein Verfahren nach einem der Ansprüche 16 bis 18,
bei dem sich die Audiowiedergabevorrichtung an einem, vom Computer entfernten Ort befindet, wobei die nicht umgewandelten Signale mittels einer Informationsübertragungsverbindung zwischen den Orten übertragen werden.

## Revendications

1. Décodeur (20) destiné à être utilisé avec un dispositif de lecture audio (26), le décodeur (20) comportant une entrée destinée à être connectée à la sortie du dispositif de lecture (26); et des moyens pour détecter des signaux codés dans un signal introduit à partir du dispositif de lecture (26) et pour convertir les signaux codés depuis une forme codée en des signaux de frappe convenant pour être appliqués à l'entrée à clavier d'un ordinateur (22) ; caractérisé en ce que le décodeur (20) comprend une sortie destinée à être connectée à l'entrée à clavier d'un ordinateur (22) de sorte que les signaux de frappe peuvent être appliqués à l'ordinateur.

2. Appareil selon la revendication 1 comprenant en outre une sortie destinée à être connectée à l'entrée d'un dispositif de reproduction du son de sorte que des signaux non convertis provenant de l'entrée du décodeur peuvent être appliqués à ce dispositif.

3. Appareil selon la revendication 1 ou 2, dans lequel l'entrée du décodeur (20) peut être connectée à une liaison de communication de sorte qu'elle peut être connectée de manière à recevoir un signal d'entrée provenant d'un dispositif de lecture (16) situé en un emplacement éloigné.

4. Appareil selon l'une quelconque des revendications précédentes, dans lequel les signaux de commande codés se présentent sous la forme de signaux sonores à fréquences multiples à deux tonalités ("DTMF").

5. Appareil selon l'une quelconque des revendications précédentes, dans lequel les moyens pour convertir les signaux de commande codés agissent de manière à convertir ces signaux sous forme hexadécimale.

6. Appareil d'enregistrement (16) comprenant une entrée pour recevoir un signal audio et des moyens pour enregistrer ledit signal audio sur un support d'enregistrement; l'appareil d'enregistrement étant caractérisé en ce qu'il comprend un codeur (10) comportant une entrée pour recevoir des signaux de frappe produits par un dispositif à clavier (14) pour un ordinateur (12), et des moyens pour convertir lesdits signaux en des signaux à fréquences multiples à deux tonalités (DTMF), pouvant être enregistrés par les moyens d'enregistrement (16) des signaux audio; le codeur (10) comportant une sortie destinée à être connectée à une entrée desdits moyens d'enregistrement (16), de sorte que les signaux audio et les signaux de commande convertis peuvent être enregistrés conjointement sur le support d'enregistrement.

7. Appareil selon la revendication 5 ou 6, incluant des moyens d'édition (32) comprenant des moyens pour mémoriser les signaux de frappe et des moyens formant processeur pour éditer des signaux mémorisés.

8. Appareil selon la revendication 7, dans lequel les signaux de frappe sont appliqués en entrée des moyens d'édition (32) avant d'être convertis en des tonalités DTMF, les moyens d'édition (32) possédant une sortie destinée à être connectée à l'entrée du codeur (10).

9. Enregistrement audio comprenant un support d'enregistrement sur lequel sont enregistrés des signaux représentant une piste son et des signaux codés; l'enregistrement étant caractérisé en ce que les signaux codés sont dérivés de signaux de frappe produits par un dispositif à clavier (14) pour un ordinateur (12) de sorte que, lors de la lecture de l'enregistrement, les signaux codés peuvent, après décodage, être appliqués à l'entrée à clavier d'un ordinateur pour le faire fonctionner simultanément avec reproduction de la piste son.

10. Enregistrement audio selon la revendication 9, dans lequel les signaux codés sont présents sous la forme de tonalités DTMF.

11. Procédé pour réaliser un enregistrement audio selon la revendication 10, caractérisé en ce que des signaux de frappe produits par un dispositif d'entrée à clavier (14) pour un ordinateur (12) sont convertis sous une forme codée apte à être enregistrée par des moyens d'enregistrement de signaux audio; et les signaux codés sont enregistrés sur un support d'enregistrement conjointement avec des signaux représentant une piste son.

12. Procédé selon la revendication 11, dans lequel les signaux de frappe produits par le dispositif à clavier (14) sont appliqués à une entrée d'un codeur (10) comportant une sortie connectée à l'entrée de moyens d'enregistrement de signaux audio (16), les moyens d'enregistrement de signaux audio (16) recevant un signal audio représentant la piste son, simultanément avec les signaux codés provenant de la sortie du codeur, pour l'enregistrement.

13. Procédé selon la revendication 11 ou 12, dans lequel les signaux de frappe sont convertis en des tonalités DTMF.

14. Procédé selon l'une quelconque des revendications 11 à 13, dans lequel les signaux de frappe sont mémorisés et les signaux mémorisés sont édités avant l'enregistrement.

15. Procédé selon la revendication 14, dans lequel les signaux de frappe sont mémorisés et édités avant d'être convertis sous une forme permettant un enregistrement par des moyens d'enregistrement de signaux audio.

16. Procédé pour faire fonctionner un ordinateur, le procédé comprenant la relecture d'un enregistrement audio conformément à la revendication 9, à l'aide d'un dispositif de lecture audio; le procédé étant caractérisé en ce que des signaux de frappe codés enregistrés sur le support d'enregistrement de l'enregistrement audio sont détectés et convertis en des signaux de frappe pour un ordinateur, les signaux convertis étant appliqués à l'entrée à clavier d'un ordinateur pour faire fonctionner ce dernier.

17. Procédé selon la revendication 16, dans lequel les signaux de frappe codés se présentent sous la forme de tonalités DTMF.

18. Procédé selon la revendication 16 ou 17, dans lequel les signaux de frappe codés sont convertis sous forme hexadécimale.

19. Procédé selon l'une quelconque des revendications 16 à 18, dans lequel le dispositif de lecture audio est situé en un emplacement distant de l'ordinateur, les signaux non convertis étant transmis au moyen d'une liaison de communication entre les emplacements.
